# EUROPEAN PATENT SPECIFICATION

(11) **EP 2 845 425 B1**
(45) Date of publication and mention of the grant of the patent: **07.08.2019**
(21) Application number: 13724183.2
(22) Date of filing: 02.05.2013
(51) Int. Cl.: H04W 60/04, H04W 64/00, H04W 84/04

(54) **METHOD FOR USING A FEMTOCELL BASE STATION AND A USER EQUIPMENT IN A PUBLIC LAND MOBILE NETWORK, FEMTOCELL BASE STATION, PROGRAM AND COMPUTER PROGRAM PRODUCT**
VERFAHREN ZUR VERWENDUNG EINER FEMTOCELL-BASISSTATION UND EINER BENUTZERAUSRÜSTUNG IN EINEM ÖFFENTLICHEN LANDFUNKNETZ, FEMTOCELL-BASISSTATION, PROGRAMM UND COMPUTERPROGRAMMPRODUKT
PROCÉDÉ D'UTILISATION D'UNE STATION DE BASE DE FEMTOCELLULES ET ÉQUIPEMENT UTILISATEUR DANS UN RÉSEAU MOBILE TERRESTRE PUBLIC, STATION DE BASE DE FEMTOCELLULES, RÉSEAU MOBILE TERRESTRE PUBLIC, PROGRAMME ET PRODUIT DE PROGRAMME INFORMATIQUE

(30) Priority: 04.05.2012 EP 12003456
(43) Date of publication of application: 11.03.2015
(73) Proprietor: T-Mobile Czech Republic A.S., 149 00 Praha 4 (CZ)
(72) Inventor: BOHAT¬, David, Brezineves 182 Praha 8 (CZ)
(74) Representative: Schwöbel, Thilo K.
(86) International application number: PCT/EP2013/059135
(87) International publication number: WO 2013/164398

(56) References cited:
- WO-A1-2007/040449
- FR-A1- 2 966 686
- QUALCOMM EUROPE: "Restricted Association for HNBs", 3GPP DRAFT; R2-075125, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137579,
- TELECOM ITALIA ET AL: "Way Forward for HNBAP procedures design", 3GPP DRAFT; R3-082611, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050323886,
- "Universal Mobile Telecommunications System (UMTS); LTE; Security of Home Node B (HNB) / Home evolved Node B (HeNB) (3GPP TS 33.320 version 10.4.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 3, no. V10.4.0, 1 January 2012 (2012-01-01), XP014069568,

## Description

### BACKGROUND

The present invention relates a method for using a femtocell base station and a user equipment in a public land mobile network, wherein the femtocell base station is connected to the public land mobile network via a femtocell gateway entity.

The present invention furthermore relates to a femtocell base station to be used with a public land mobile network, and to a public land mobile network, wherein a femtocell base station is connected to the public land mobile network.

A femtocell, herein after also called a femtocell base station, is a small base station that has a very small range of the radio coverage area. Typically, such a femtocell base station is placed at a subscriber's premises and the subscriber installs the femtocell base station without operator control, i.e. without the control or the help of the network operator of a public land mobile network with which the femtocell base station should be used.

The problem with customer self installation is that the operator of the public land mobile network has no control over the location of such a femtocell base station. A significant problem can arise in case that the subscriber, i.e. the owner of the femtocell base station, moves the femtocell base station out of the home country of the operator of the public land mobile network and places the femtocell base station in a different location, especially in a foreign country. The problem is aggravated in case that the femtocell base station is operated in a mode of operation such that the femtocell base station is accessible by an arbitrary subscriber (i.e. corresponds to an open mode of operation of the femtocell base station). In such a situation, user equipments of a foreign operator (i.e. a network operator of a public land mobile network in the foreign country, different from the network operator with which the femtocell base station has been initially deployed) can start camping on and using such a femtocell base station. As a consequence thereof, such user equipments of a foreign operator enter into a roaming mode when using the femtocell base station without that the subscriber of either the foreign user equipment or the subscriber that owns the femtocell base station would be aware of such a roaming mode. Such a situation can have serious consequences such as significant roaming costs for subscribers that reach the home country (originally associated with the femtocell base station), for example an emergency center, which is for such subscribers a foreign network and does therefore not correspond to their intention of reaching, e.g. an emergency center, in their home country. A method for testing a femto-type box, connected to a mobile telephone infrastructure network, through a network module, connected to an Internet-type network, the network module having a network address is disclosed in FR 2 966 686 A1.

### SUMMARY

An object of the present invention is to provide a simple solution for reducing risks associated with the functionality of using femtocell base stations as access points, especially in the case, that such femtocell base stations are originally operated in a first country and then relocated to a different country.

The object of the present invention is achieved by a method according to claim 1.

According to the present invention, it is advantageously possible that by using the inventive method, an analysis of the value of the last visited location area of a user equipment trying to use the femtocell base station as an access point to access a public land mobile network (the value of the last visited location area is sent as part of the location update signalling) is conducted such that unwanted roaming activities of such a contact between a user equipment and the femtocell base station can be avoided. Such a situation can especially occur in case that the femtocell base station is originally deployed in a first country and then taken to a second country without a proper change of the corresponding configuration of the femtocell base station.

Conventionally available mechanisms to prevent unwanted roaming costs include an autonomous check of the locaction of the femtocell base station, e.g. in the form of a scan of the surrounding macro network (of the public land mobile network in the country to which the femtocell base station has been taken) or a satellite-aided triangulation (e.g. by a GPS receiver). However, such methods fail in case that the femtocell base station is located in an area without the network coverage of a public land mobile network, especially a surrounding macro network, and in a location where GPS signals cannot be received or are too weak to be received, such as a location in a basement of a building or in remote areas. In order to prevent unwanted roaming activities, it is furthermore known to check the value of the subscriber identity (such as the IMSI value) which is sent by the user equipment while it tries to access the femtocell base station. The subscriber identity also comprises the identification of the subscriber's home network, which corresponds in case of a relocation of the femtocell base station, generally to a public land mobile network in the country to where the femtocell base station has been transferred. In such a case, only subscribers of the home network are allowed to access the femtocell base station which will effectively prevent unwanted roaming activities of subscribers of other networks in case the femtocell base station is taken into a foreign location. However, this solution would have the side effect, that it also prevents roaming activities of subscribers to access the femtocell base station in case that the femtocell base station is correctly installed in the home network, i.e. such a solution corresponds to restricting the use of the femtocell base station only to those user equipments that are subscribed to the home network of the femtocell base station.

According to the present invention, it is advantageously possible to base the decision whether roaming activities should be allowed or not on the value of the previous location information, preferably being derived from the last visited location area, i.e. the decision is based on the result of a test, whether the at least one previous location information of the user equipment trying to access the femtocell base station corresponds or matches the permission information that is related to the femtocell base station, for example in the form of a memory location within the femtocell base station storing the permission information or in the form of the public land mobile network (working with the femtocell base station) storing the permission information.

According to the present invention, or at least according to a preferred embodiment of the present invention, the permission information corresponds to at least one Mobile Country Code or to at least one Mobile Country Code and Mobile Network Code which means that the permission information will contain only the Mobile Country Core or Mobile Country Code and Mobile Network Code of the mobile networks that can be deployed in the same locations as the femtocell base station that are deployed correctly according to the rules defined by the operator of the mobile network to which the femtocell base station belongs.

According to the present invention, it is preferred that the permission information is stored in the femtocell base station and the test according to the second step of the inventive method is performed in the femtocell base station.

This has the advantage that the test according to the second step can occur locally such that potential additional signalling traffic can be avoided by means of quickly discontinuing the location update signalling procedure in case that there is no match between the at least one previous location information and the permission information.

According to another exemplary embodiment of the present invention, it is preferred that the permission information is stored in the femtocell gateway entity or in the public land mobile network, wherein the test according to the second step is performed in the femtocell gateway entity and/or in the public land mobile network.

This solution means that it is the entity which stores the permission information that is conducting the test according to the second step of the inventive method, i.e. either the femtocell gateway entity (storing the information and performing the test) or the public land mobile network. Thereby it is advantageously possible to centrally store the permission information (i.e. not in the femtocell base station) such that it is comparably easy to administrate a plurality of femtocell base stations.

Furthermore, it is preferred according to the present invention that the permission information corresponds to at least one (or a list of) Mobile Country Code or to at least one Mobile Country Code and Mobile Network Code, and wherein the at least one previous location information corresponds to the Mobile Country Code or to the Mobile Country Code and the Mobile Network Code of the last successfully visited location of the user equipment.

It is thereby advantageously possible to use such an indication of the country (by using only the Mobile Country Code) and/or of the country and the mobile network (by using the Mobile Country Code and the MNC) to avoid unwanted roaming activities. Of course it is possible according to the present invention that other information or pieces of information is/are exchanged between the user equipment and the femtocell base station to be used as the permission information and the last successfully visited location of the user equipment.

According to the present invention, it is furthermore preferred that in case that the at least one previous location information does not match the permission information, either:
-- a change of the femtocell base station to a closed mode of operation occurs such that access to the public land mobile network via the femtocell base station is possible only for a predefined set of other user equipments, or
-- a change of the femtocell base station to a reduced mode of operation occurs for the user equipment, or
-- the radio interface of the femtocell base station is disabled.

According to the present invention, it is thereby advantageously possible to change the behaviour of the femtocell base station such that in a reliable manner unwanted roaming activities can be suppressed.

According to the present invention, in case that the at least one previous location information does not match the permission information, at least one out of the following actions is performed:
-- a counter related to the unsuccessful match between the at least one previous location information of the user equipment and the permission information is changed,
-- a message related to the unsuccessful match between the at least one previous location information of the user equipment and the permission information is sent to a predefined target address.

It is thereby advantageously possible according to the present invention to flexibly react in case of an unsuccessful match between the at least one previous location information on the one hand and the permission information on the other hand. For example, according to the present invention - at a first occurrence of the situation that the at least one previous location information does not match the permission information - only the counter related to the unsuccessful match between the at least one previous location information of the user equipment and the permission information is changed (e.g. increased or decreased) and after the counter reaching a predefined threshold value (i.e. after a plurality of such situations (e.g. 2 or 3 or 4 or 5 or 6 or 10) that the at least one previous location information does not match the permission information) the location update signalling procedure is discontinued and/or
-- a change of the femtocell base station to a closed mode of operation occurs, or
-- a change of the femtocell base station to a reduced mode of operation occurs for the user equipment, or
-- the radio interface of the femtocell base station is disabled.
It is especially preferred according to the present invention that the location update signalling procedure is discontinued and/or
-- a change of the femtocell base station to a closed mode of operation occurs, or
-- a change of the femtocell base station to a reduced mode of operation occurs for the user equipment, or
-- the radio interface of the femtocell base station is disabled
provided that the counter reaches the predefined threshold value or provided that a predefined data volume is transmitted or requested to be transmitted via the femtocell base station.

According to the present invention, it is furthermore preferred that the counter value is a either stored in a memory location that is either located in the femtocell base station or that is located outside the femtocell base station (e.g. in the femtocell gateway entity) but associated with the femtocell base station. According to a preferred embodiment of the present invention, the counter value is cleared once a successful location update is performed and/or after a predetermined time period.

It is furthermore preferred according to the present invention that the public land mobile network comprises a position information related to the current position of the femtocell base station, wherein in case of a confirmation of the position information, the method comprises a fourth step, wherein in the fourth step, the test according to the second step is prevented for such a location update signalling procedure between the femtocell base station and the user equipment that occurs subsequent to the confirmation of the position information.

It is thereby advantageously possible according to the present invention that the protection mechanism according to the present invention (which should be invoked in case of the femtocell base station being at an unknown position, i.e. unknown to the public land mobile network associated to the femtocell base station) is released and additional roaming traffic even in case that the test according to the second step of the inventive method would yield a negative result allowed, i.e. in case the at least one previous location information does not match the permission information.

The present invention furthermore additionally relates to a femtocell base station according to claim 6.

With such a femtocell base station, it is advantageously possible according to the present invention that unwanted roaming traffic can be effectively prevented in case that the femtocell base station has been relocated and the location of the femtocell base station is unknown to the public land mobile network associated to the femtocell base station.

Also with regard to the femtocell base station, it is preferred that the permission information corresponds to at least one Mobile Country Code or to at least one Mobile Country Code and Mobile Network Code, and wherein the at least one previous location information corresponds to the Mobile Country Code or to the Mobile Country Code and the Mobile Network Code of the last successfully visited location of the user equipment.

Also, a public land mobile network is disclosed, wherein a femtocell base station is connected to the public land mobile network via a femtocell gateway entity, wherein at least one permission information is related to the femtocell base station, wherein the public land mobile network is configured such that a location update signalling procedure is initiated between the femtocell base station and the user equipment, wherein at least one previous location information of the user equipment is transmitted from the user equipment to the femtocell base station, the at least one previous location information being derived from or being a part of an indication regarding the last successfully visited location of the user equipment, wherein the public land mobile network is furthermore configured such that a test is performed whether the at least one previous location information matches the permission information, and wherein the public land mobile network is furthermore configured such that the location update signalling procedure is continued in case that the at least one previous location information matches the permission information, and the location update signalling procedure is discontinued in case that the at least one previous location information does not match the permission information.

Additionally, the present invention relates to a program according to claim 7.

Still additionally, the present invention relates to a computer-readable storage medium according to claim 8.

These and other characteristics features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

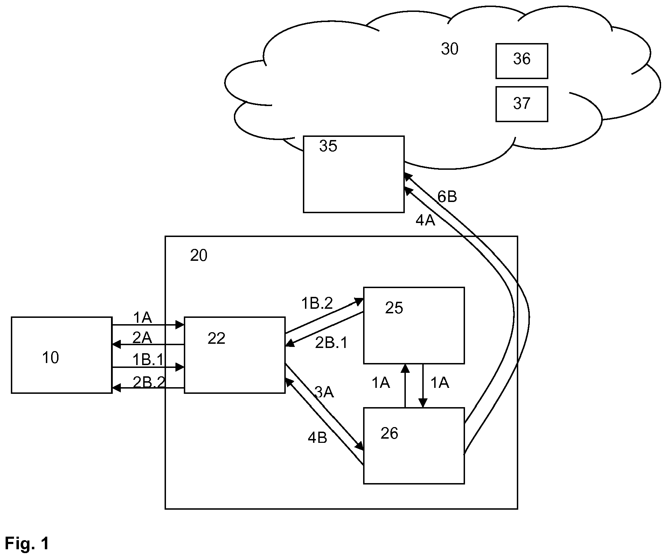

Figure 1 schematically illustrates an example of a system architecture and an example of a message flow according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, an example of a system architecture and an example of a message flow according to the present invention is schematically shown.

According to Figure 1, a user equipment 10 is connected to a femtocell base station 20. The femtocell base station 20 is connected to a public land mobile network 30, especially via a femtocell gateway entity 35. The public land mobile network 30 typically comprises a multitude of network entities, where in Figure 1 only two network entities are schematically and exemplarily shown, namely an MSC (Mobile Switching Center) 36 and a SGSN (Serving GPRS Support Node) 37. The femtocell base station 20 preferably comprises a femtocell 22 or a femtocell component 22, i.e. comprising antenna means and further circuitry regarding the processing and/or generation of radio frequency signals. Furthermore, the femtocell base station 20 comprises a femtocell gateway component 25 and a femtocell management system 26.

Typically, femtocells or femtocell base stations 20 have assigned a unique location area (LA) and routing area (RA) value in order to force the user equipment 10 to perform location area update and/or to perform routing area update once it enters the coverage area of the femtocell base station 20. This assures that the associated public land mobile network 30 is aware that the user equipment 10 is using the femtocell base station 20, i.e. the femtocell, and proper routing (especially of backhaul call data transmission) is configured inside the public land mobile network 30.

During the location area update and/or the routing area update procedures (both procedures are in the context of the present invention also referred to as location update signalling procedure), the last successfully visited location of the user equipment 10 (i.e. a location area information such as the LAI value (location area identifier) in case of a location area update procedure and a routing area indication such as the RAI value (routing area identifier) in case of a routing area update procedure is sent to the network, i.e. to the femtocell base station 20, including the Mobile Country Code (MCC) and Mobile Network Code (MNC) of the last visited location area and/or routing area.

It is not expected according to the present invention that the user equipment 10 which tries to connect to the public land mobile network 30 via the femtocell base station 20 will make the first roaming attach in the foreign country to which the femtocell base station 20 has been transferred. Therefore, it can be expected that the last visited location, i.e. the previous location information (such as the location area identifier or the routing area identifier and the like) which is sent during the location update signalling procedure (such as the location area update procedure or the routing area update procedure) will contain the same Mobile Country Code as the public land mobile network 30 with which the femtocell base station 20 is associated or connected. In case that the previous location information of the user equipment 10 does not necessarily correspond to the same Mobile Network Code, roaming subscribers which were previously roaming in another network in the same Mobile Country Code region can change to the public land mobile network 30 which is associated with the femtocell base station 20, i.e. these user equipments 10 can change the roaming operator to the femtocell operator.

In the following, the functionality of the inventive method according to the present invention is described with respect to Figure 1 for two different embodiments of the present invention. According to a first embodiment of the present invention, the user equipment 10 enters the radio coverage area of the femtocell base station 20, recognizes a new location area (or routing area) and initiates a location area updating procedure (or a routing area updating procedure) by sending a location area update request message (or a routing area update request message) to the femtocell base station 20 including the value of the last successfully visited location information (i.e. the LAI, Location Area Identifier and/or the RAI, Routing Area Identifier) which includes the value of the Mobile Country Code of the previous successful registration of the user equipment 10 (i.e. the previous location information). This corresponds to a first message 1A from the user equipment 10 to the femtocell component 22 of the femtocell base station 20. According to the first embodiment, the femtocell component 22, i.e. the femtocell base station 20, analyses the indication regarding the last successfully visited location of the user equipment 10, i.e. especially the location area update request message (and/or the routing area update request message). After recognizing that the previous location information being derived from or being a part of an indication regarding the last successfully visited location of the user equipment 10 does not match a permission information related to the femtocell base station 20, the location update signalling procedure (or routing area update signalling procedure) is rejected by means of a second message 2Afrom the femtocell base station 20 to the user equipment 10. The at least one permission information related to the femtocell base station 20 is preferably an allowed MCC information (Mobile Country Code) which is either stored in the femtocell base station 20 or in the femtocell gateway entity 35 or in a network entity of the public land mobile network 30. As permission information, there can be a plurality of Mobile Country Code values accepted to be used. In case that the test performed whether the at least one previous location information matches the permission information yields a positive result, the location update signalling procedure is continued and the user equipment 10 is finally connected to the public land mobile network 30 via the femtocell base station 20.

According to a second embodiment of a message flow between the user equipment 10 and the femtocell base station 20, the user equipment 10 enters the femtocell base station 20 coverage area, recognizes a new location indication (e.g. a new location area identifier and/or a new routing area identifier) and sends a location area update request message (or a routing area update request message) by means of a third message 1B.1 to the femtocell base station 20, especially to the femtocell component 22 including the value of the last successfully visited location (especially a location area identifier or a routing area identifier), which especially includes an MCC value as the previous location information. According to the second embodiment, the femtocell component 22 forwards the location area update request to the femtocell gateway component 25 via a fourth message 1B.2. The femtocell gateway component 25 analyses the previous location information being derived from or being a part of an indication regarding the last successfully visited location of the user equipment 10. In case this information does not match the permission information related to the femtocell base station 20, the location update signalling procedure is rejected by means of a fifth message 2B.1 between the femtocell gateway component 25 and the femtocell component 22. The femtocell component 22 forwards this rejection message to the user equipment 10 via a sixth message 2B.2.

In all such cases of a rejection of a location update signalling procedure (be it according to the first embodiment involving the first and second messages 1A, 2A or be it according to the second embodiment involving the third message 1B.1, the forth message 1B.2, the fifth message 2B.1 and the sixth message 2B.2) a plurality of further options and reactions of the femtocell base station 20 is possible to be realized according to the present invention.

Optionally, the femtocell base station 20 enters a closed mode of operation so that only user equipments that identify themselves, e.g. by means of an IMSI number matching with one value of a predefined list of allowed IMSI numbers, to use the femtocell. Alternatively, the femtocell base station disables its radio interface completely after a rejection of a location update signalling procedure. According to a further optional behaviour of the femtocell base station 20, the femtocell base station disables the package switched service and starts a monitoring of all call set-up requests and rejects any requests that do not have target numbers belonging to a predefined list of numbers or alternatively redirects such requests to a predefined phone number or pre-recorded message. Furthermore alternatively, it is possible and preferred according to the present invention that the femtocell base station sends a seventh message 3A to the femtocell management system 26 to provide information about a rejection event. According to still another optional behaviour of the femtocell base station 20, the femtocell management system 26 sends an SMS message containing information about the new femtocell configuration (e.g. the invocation of the closed mode or invocation of the disabled radio interface or the like) to a subscriber which is predefined as being responsible for the femtocell base station 20 by means of an eighth message 4A to the femtocell gateway entity 35.

Furthermore optionally, the femtocell management system 26 instructs the femtocell component 22 to reconfigure itself by means of a ninth message 4B with a new configuration which includes optionally a closed-mode operation in which only user equipments identifying themselves with a valid IMSI included in a predefined list are allowed to use the femtocell base station 20. Alternatively, the femtocell base station disables its radio interface. Furthermore optionally, the femtocell management system 26 provides the femtocell gateway 25 with a new configuration information of the femtocell base station 20 in question by means of a tenth message 5B with a new configuration (which can alternatively also include a closed-mode operation (in which only user equipments identifying themselves with a valid IMSI included in a predefined list are allowed to use the femtocell base station 20) or a mode of operation with disabled radio interface). According to still another optional behaviour of the femtocell base station 20, the femtocell management system 26 sends an SMS message containing information about the new femtocell configuration (e.g. the invocation of the closed mode or invocation of the disabled radio interface or the like) to a subscriber which is predefined as being responsible for the femtocell base station 20 by means of an eleventh message 6B to the femtocell gateway entity 35.

## Claims

1. Method for using a femtocell base station (20) and a user equipment (10) in a public land mobile network (30), wherein the femtocell base station (20) is connected to the public land mobile network (30) via a femtocell gateway entity (35), wherein at least one permission information is related to the femtocell base station (20), wherein the method comprises the following steps:
-- in a first step, a location update signalling procedure is initiated between the femtocell base station (20) and the user equipment (10), wherein at least one previous location information of the user equipment (10) is transmitted from the user equipment (10) to the femtocell base station (20), the at least one previous location information being derived from or being a part of an indication regarding the last successfully visited location of the user equipment (10), **characterized in that**
-- in a second step, a test is performed whether the at least one previous location information matches the permission information,
-- in a third step, the location update signalling procedure is continued in case that the at least one previous location information matches the permission information, and the location update signalling procedure is discontinued in case that the at least one previous location information does not match the permission information,
wherein the permission information corresponds to at least one Mobile Country Code or to at least one Mobile Country Code and Mobile Network Code, and
wherein the at least one previous location information corresponds to the Mobile Country Code or to the Mobile Country Code and the Mobile Network Code of the last successfully visited location of the user equipment (10),
wherein in case that the at least one previous location information does not match the permission information, at least one out of the following actions is performed:
-- a counter related to the unsuccessful match between the at least one previous location information of the user equipment (20) and the permission information is changed,
-- a message related to the unsuccessful match between the at least one previous location information of the user equipment (20) and the permission information is sent to a predefined target address.

2. Method according to claim 1, wherein the permission information is stored in the femtocell base station (20), and wherein the test according to the second step is performed in the femtocell base station (20).

3. Method according to claim 1, wherein the permission information is stored in the femtocell gateway entity (35) or in the public land mobile network (30), and wherein the test according to the second step is performed in the femtocell gateway entity (35) and/or in the public land mobile network (30).

4. Method according to any of the preceding claims, wherein in case that the at least one previous location information does not match the permission information, either:
-- a change of the femtocell base station (20) to a closed mode of operation occurs such that access to the public land mobile network via the femtocell base station (20) is possible only for a predefined set of other user equipments, or
-- a change of the femtocell base station (20) to a reduced mode of operation occurs for the user equipment (10), or
-- the radio interface of the femtocell base station (20) is disabled.

5. Method according to any of the preceding claims, wherein a position information related to the current position of the femtocell base station (20) is stored in the public land mobile network (10), wherein in case of a confirmation of the position information, the method comprises a fourth step, wherein in the fourth step, the test according to the second step is prevented for such a location update signalling procedure between the femtocell base station (20) and the user equipment (10) that occurs subsequent to the confirmation of the position information.

6. Femtocell base station (20) to be used with a public land mobile network (30), wherein the femtocell base station (20) is connected to the public land mobile network (30) via a femtocell gateway entity (35), wherein at least one permission information is related to the femtocell base station (20), wherein the femtocell base station (20) is configured such that a location update signalling procedure is initiated between the femtocell base station (20) and the user equipment (10), wherein at least one previous location information of the user equipment (10) is transmitted from the user equipment (10) to the femtocell base station (20), the at least one previous location information being derived from or being a part of an indication regarding the last successfully visited location of the user equipment (10), **characterized in that** the femtocell base station (20) is furthermore configured such that a test is performed whether the at least one previous location information matches the permission information, and wherein the femtocell base station (20) is furthermore configured such that the location update signalling procedure is continued in case that the at least one previous location information matches the permission information, and the location update signalling procedure is discontinued in case that the at least one previous location information does not match the permission information,
wherein the permission information corresponds to at least one Mobile Country Code or to at least one Mobile Country Code and Mobile Network Code, and
wherein the at least one previous location information corresponds to the Mobile Country Code or to the Mobile Country Code and the Mobile Network Code of the last successfully visited location of the user equipment (10),
wherein in case that the at least one previous location information does not match the permission information, at least one out of the following actions is performed:
-- a counter related to the unsuccessful match between the at least one previous location information of the user equipment (20) and the permission information is changed,
-- a message related to the unsuccessful match between the at least one previous location information of the user equipment (20) and the permission information is sent to a predefined target address.

7. Program comprising a computer readable program code which, when executed on a computer or on a femtocell base station (20) or on a network entity of a public land mobile network (30), causes the computer or the femtocell base station (20) or the network entity of the public land mobile network (30) to perform a method according one of claims 1 to 5.

8. Computer-readable storage medium comprising a computer program which, when executed on a computer or on a femtocell base station (20) or on a network entity of a public land mobile network (30), causes the computer or the femtocell base station (20) or the network entity of the public land mobile network (30) to perform a method according one of claims 1 to 5.

## Patentansprüche

1. Verfahren für die Verwendung einer Femtozellen-Basisstation (20) und eines Nutzerendgerätes (10) in einem öffentlichen landgestützten Mobilfunknetz (30), wobei die Femtozellen-Basisstation (20) mit dem öffentlichen landgestützten Mobilfunknetz (30) über eine Femtozellen-Gateway-Entität (35) verbunden ist, wobei mindestens eine Erlaubnis-Information mit der Femtozellen-Basisstation (20) verknüpft ist, wobei das Verfahren die folgenden Schritte umfasst:
- in einem ersten Schritt wird ein Standortaktualisierungszeichengabeprocedere zwischen der Femtozellen-Basisstation (20) und dem Nutzerendgerät (10) initiiert, wobei mindestens eine vorherige Standortinformation des Nutzerendgerätes (10) von dem Nutzerendgerät (10) zu der Femtozellen-Basisstation (20) gesendet wird, wobei die mindestens eine vorherige Standortinformation von einem Hinweis bezüglich des letzten erfolgreich besuchten Standortes des Nutzerendgerätes (10) abgeleitet wird oder ein Teil eines solchen Hinweises ist,
**dadurch gekennzeichnet, dass**
- in einem zweiten Schritt ein Test ausgeführt wird, ob die mindestens eine vorherige Standortinformation mit der Erlaubnis-Information übereinstimmt,
- in einem dritten Schritt das Standortaktualisierungszeichengabeprocedere fortgesetzt wird, falls die mindestens eine vorherige Standortinformation mit den Erlaubnis-Information übereinstimmt, und wird das Standortaktualisierungszeichengabeprocedere nicht fortgesetzt, falls die mindestens eine vorherige Standortinformation nicht mit der Erlaubnis-Information übereinstimmt,
wobei die Erlaubnis-Information mindestens einer Mobilfunk-Länderkennung oder mindestens einer Mobilfunk-Länderkennung und einer Mobilfunknetzkennzahl entspricht und wobei die mindestens eine vorherige Standortinformation der Mobilfunk-Länderkennung oder der Mobilfunk-Länderkennung und der Mobilfunknetzkennzahl des letzten erfolgreich besuchten Standortes des Nutzerendgerätes (10) entspricht, wobei, falls die mindestens eine vorherige Standortinformation nicht mit der Erlaubnis-Information übereinstimmt, mindestens eine von folgenden Aktionen ausgeführt wird:
- ein Zähler im Zusammenhang mit dem erfolglosen Abgleich zwischen der mindestens einen vorherigen Standortinformation des Nutzerendgerätes (20) und der Erlaubnis-Information wird geändert,
- eine Nachricht im Zusammenhang mit dem erfolglosen Abgleich zwischen der mindestens einen vorherigen Standortinformation des Nutzerendgerätes (20) und der Erlaubnis-Information wird an eine zuvor festgelegte Zieladresse gesendet.

2. Verfahren nach Anspruch 1, wobei die Erlaubnis-Information in der Femtozellen-Basisstation (20) gespeichert wird und wobei der Test gemäß dem zweiten Schritt in der Femtozellen-Basisstation (20) ausgeführt wird.

3. Verfahren nach Anspruch 1, wobei die Erlaubnis-Information in der Femtozellen-Gateway-Entität (35) oder in dem öffentlichen landgestützten Mobilfunknetz (30) gespeichert wird und wobei der Test gemäß dem zweiten Schritt in der Femtozellen-Gateway-Entität (35) und/oder in dem öffentlichen landgestützten Mobilfunknetz (30) ausgeführt wird.

4. Verfahren nach einem der vorangehenden Ansprüche, wobei, falls die mindestens eine vorherige Standortinformation nicht mit der Erlaubnis-Information übereinstimmt, entweder:
- ein Wechsel der Femtozellen-Basisstation (20) zu einem geschlossenen Betriebsmodus stattfindet, so dass ein Zugang zu dem öffentlichen landgestützten Mobilfunknetz über die Femtozellen-Basisstation (20) nur für einen zuvor festgelegten Satz anderer Nutzerendgeräte möglich ist, oder
- ein Wechsel der Femtozellen-Basisstation (20) zu einem reduzierten Betriebsmodus für das Nutzerendgerät (10) stattfindet, oder
- die Funkschnittstelle der Femtozellen-Basisstation (20) deaktiviert wird.

5. Verfahren nach einem der vorangehenden Ansprüche, wobei eine Positionsinformation im Zusammenhang mit der momentanen Position der Femtozellen-Basisstation (20) in dem öffentlichen landgestützten Mobilfunknetz (10) gespeichert wird, wobei das Verfahren für den Fall einer Bestätigung der Positionsinformation einen vierten Schritt umfasst, wobei in dem vierten Schritt der Test gemäß dem zweiten Schritt für ein solches Standortaktualisierungszeichengabeprocedere zwischen der Femtozellen-Basisstation (20) und dem Nutzerendgerät (10) verhindert wird, das im Anschluss an die Bestätigung der Positionsinformation stattfindet.

6. Femtozellen-Basisstation (20), die mit einem öffentlichen landgestützten Mobilfunknetz (30) zu verwenden ist, wobei die Femtozellen-Basisstation (20) mit dem öffentlichen landgestützten Mobilfunknetz (30) über eine Femtozellen-Gateway-Entität (35) verbunden ist, wobei mindestens eine Erlaubnis-Information mit der Femtozellen-Basisstation (20) verknüpft ist, wobei die Femtozellen-Basisstation (20) so ausgestaltet ist, dass ein Standortaktualisierungszeichengabeprocedere zwischen der Femtozellen-Basisstation (20) und dem Nutzerendgerät (10) initiiert wird, wobei mindestens eine vorherige Standortinformation des Nutzerendgerätes (10) von dem Nutzerendgerät (10) zu der Femtozellen-Basisstation (20) gesendet wird, wobei die mindestens eine vorherige Standortinformation von einem Hinweis bezüglich des letzten erfolgreich besuchten Standortes des Nutzerendgerätes (10) abgeleitet wird oder ein Teil eines solchen Hinweises ist, **dadurch gekennzeichnet, dass** die Femtozellen-Basisstation (20) des Weiteren so ausgestaltet ist, dass ein Test ausgeführt wird, ob die mindestens eine vorherige Standortinformation mit den Erlaubnis-Information übereinstimmt, und wobei die Femtozellen-Basisstation (20) des Weiteren so ausgestaltet ist, dass das Standortaktualisierungszeichengabeprocedere fortgesetzt wird, falls die mindestens eine vorherige Standortinformation mit den Erlaubnis-Information übereinstimmt, und das Standortaktualisierungszeichengabeprocedere nicht fortgesetzt wird, falls die mindestens eine vorherige Standortinformation nicht mit der Erlaubnis-Information übereinstimmt,
wobei die Erlaubnis-Information mindestens einer Mobilfunk-Länderkennung oder mindestens einer Mobilfunk-Länderkennung und einer Mobilfunknetzkennzahl entspricht und wobei die mindestens eine vorherige Standortinformation der Mobilfunk-Länderkennung oder der Mobilfunk-Länderkennung und der Mobilfunknetzkennzahl des letzten erfolgreich besuchten Standortes des Nutzerendgerätes (10) entspricht,
wobei, falls die mindestens eine vorherige Standortinformation nicht mit der Erlaubnis-Information übereinstimmt, mindestens eine von folgenden Aktionen ausgeführt wird:
- ein Zähler im Zusammenhang mit dem erfolglosen Abgleich zwischen der mindestens einen vorherigen Standortinformation des Nutzerendgerätes (20) und der Erlaubnis-Information wird geändert,
- eine Nachricht im Zusammenhang mit dem erfolglosen Abgleich zwischen der mindestens einen vorherigen Standortinformation des Nutzerendgerätes (20) und der Erlaubnis-Information wird an eine zuvor festgelegte Zieladresse gesendet.

7. Programm, das einen computerlesbaren Programmcode umfasst, der, wenn er auf einem Computer oder in einer Femtozellen-Basisstation (20) oder in einer Netzentität eines öffentlichen landgestützten Mobilfunknetzes (30) ausgeführt wird, den Computer oder die Femtozellen-Basisstation (20) oder die Netzentität des öffentlichen landgestützten Mobilfunknetzes (30) veranlasst, ein Verfahren nach einem der Ansprüche 1 bis 5 auszuführen.

8. Computerlesbares Speichermedium, das ein Computerprogramm umfasst, das, wenn es auf einem Computer oder in einer Femtozellen-Basisstation (20) oder in einer Netzentität eines öffentlichen landgestützten Mobilfunknetzes (30) ausgeführt wird, den Computer oder die Femtozellen-Basisstation (20) oder die Netzentität des öffentlichen landgestützten Mobilfunknetzes (30) veranlasst, ein Verfahren nach einem der Ansprüche 1 bis 5 auszuführen.

## Revendications

1. Procédé d'utilisation d'une station de base de femtocellule (20) et d'un équipement d'utilisateur (10) dans un réseau mobile terrestre public (30), dans lequel la station de base de femtocellule (20) est connectée au réseau mobile terrestre public (30) par l'intermédiaire d'une entité passerelle de femtocellule (35), dans lequel au moins une information de permission se rapporte à la station de base de femtocellule (20), dans lequel le procédé comprend les étapes suivantes :
- dans une première étape, une procédure de signalisation de mise à jour de localisation est lancée entre la station de base de femtocellule (20) et l'équipement d'utilisateur (10), dans lequel au moins une précédente information de localisation de l'équipement d'utilisateur (10) est transmise de l'équipement d'utilisateur (10) à la station de base de femtocellule (20), l'au moins une précédente information de localisation découlant ou faisant partie d'une indication concernant le dernier lieu visité avec succès par l'équipement d'utilisateur (10), **caractérisé en ce que** :
- dans une deuxième étape, un essai est effectué pour savoir si l'au moins une précédente information de localisation concorde avec l'information de permission,
- dans une troisième étape, la procédure de signalisation de mise à jour de localisation se poursuit dans le cas où l'au moins une précédente information de localisation concorde avec l'information de permission, et la procédure de signalisation de mise à jour de localisation est interrompue dans le cas où l'au moins une précédente information de localisation ne concorde pas avec l'information de permission,
dans lequel l'information de permission correspond à au moins un indicatif du pays du mobile ou à au moins un indicatif du pays du mobile et un indicatif de réseau du mobile, et dans lequel l'au moins une précédente information de localisation correspond à l'indicatif du pays du mobile ou à l'indicatif du pays du mobile et à l'indicatif de réseau du mobile du dernier lieu visité avec succès par l'équipement d'utilisateur (10),
dans lequel dans le cas où l'au moins une précédente information de localisation ne concorde pas avec l'information de permission, au moins l'une des actions suivantes est accomplie :
- un compteur se rapportant à la non-concordance entre l'au moins une précédente information de localisation de l'équipement d'utilisateur (20) et l'information de permission est modifié,
- un message se rapportant à la non-concordance entre l'au moins une précédente information de localisation de l'équipement d'utilisateur (20) et l'information de permission est envoyé à une adresse cible prédéfinie.

2. Procédé selon la revendication 1, dans lequel l'information de permission est stockée dans la station de base de femtocellule (20), et dans lequel l'essai selon la deuxième étape est effectué dans la station de base de femtocellule (20).

3. Procédé selon la revendication 1, dans lequel l'information de permission est stockée dans l'entité passerelle de femtocellule (35) ou dans le réseau mobile terrestre public (30), et dans lequel l'essai selon la deuxième étape est effectué dans l'entité passerelle de femtocellule (35) et/ou dans le réseau mobile terrestre public (30).

4. Procédé selon l'une quelconque des revendications précédentes, dans lequel dans le cas où l'au moins une précédente information de localisation ne concorde pas avec l'information de permission soit :
- un passage de la station de base de femtocellule (20) à un mode fermé de fonctionnement a lieu de manière que l'accès au réseau mobile terrestre public par l'intermédiaire de la station de base de femtocellule (20) ne soit possible que pour un ensemble prédéfini d'autres équipements d'utilisateurs, soit
- un passage de la station de base de femtocellule (20) à un mode restreint de fonctionnement a lieu pour l'équipement d'utilisateur (10), soit encore
- l'interface radioélectrique de la station de base de femtocellule (20) est désactivée.

5. Procédé selon l'une quelconque des revendications précédentes, dans lequel une information de position se rapportant à la position actuelle de la station de base de femtocellule (20) est stockée dans le réseau mobile terrestre public (10), dans lequel en cas de confirmation de l'information de position, le procédé comprend une quatrième étape, dans lequel dans la quatrième étape, l'essai selon la deuxième étape est empêché pour une procédure de signalisation de mise à jour de localisation entre la station de base de femtocellule (20) et l'équipement d'utilisateur (10) qui a lieu à la suite de la confirmation de l'information de position.

6. Station de base de femtocellule (20) à utiliser avec un réseau mobile terrestre public (30), dans laquelle la station de base de femtocellule (20) est connectée au réseau mobile terrestre public (30) par l'intermédiaire d'une entité passerelle de femtocellule (35), dans laquelle au moins une information de permission se rapporte à la station de base de femtocellule (20), dans laquelle la station de base de femtocellule (20) est configurée de manière qu'une procédure de signalisation de mise à jour de localisation soit lancée entre la station de base de femtocellule (20) et l'équipement d'utilisateur (10), dans laquelle au moins une précédente information de localisation de l'équipement d'utilisateur (10) est transmise de l'équipement d'utilisateur (10) à la station de base de femtocellule (20), l'au moins une précédente information de localisation découlant ou faisant partie d'une indication concernant le dernier lieu visité avec succès par l'équipement d'utilisateur (10), **caractérisée en ce que** la station de base de femtocellule (20) est configurée en outre de manière qu'un essai soit effectué pour savoir si l'au moins une précédente information de localisation concorde avec l'information de permission, et dans laquelle la station de base de femtocellule (20) est configurée en outre de manière que la procédure de signalisation de mise à jour de localisation se poursuive dans le cas où l'au moins une précédente information de localisation concorde avec l'information de permission, et la procédure de signalisation de mise à jour de localisation soit interrompue dans le cas où l'au moins une précédente information de localisation ne concorde pas avec l'information de permission,
dans laquelle l'information de permission correspond à au moins un indicatif du pays du mobile ou à au moins un indicatif du pays du mobile et un indicatif de réseau du mobile, et dans laquelle l'au moins une précédente information de localisation correspond à l'indicatif du pays du mobile ou à l'indicatif du pays du mobile et à l'indicatif de réseau du mobile du dernier lieu visité avec succès par l'équipement d'utilisateur (10),
dans lequel dans le cas où l'au moins une précédente information de localisation ne concorde pas avec l'information de permission, au moins l'une des actions suivantes est accomplie :
- un compteur se rapportant à la non-concordance entre l'au moins une précédente information de localisation de l'équipement d'utilisateur (20) et l'information de permission est modifié,
- un message se rapportant à la non-concordance entre l'au moins une précédente information de localisation de l'équipement d'utilisateur (20) et l'information de permission est envoyé à une adresse cible prédéfinie.

7. Programme comprenant un code de programme lisible par ordinateur qui, lorsqu'il est exécuté sur un ordinateur ou dans une station de base de femtocellule (20) ou encore dans une entité de réseau d'un réseau mobile terrestre public (30), fait mettre en oeuvre à l'ordinateur ou à la station de base de femtocellule (20) ou encore à l'entité de réseau du réseau mobile terrestre public (30) un procédé selon l'une des revendications 1 à 5.

8. Support de stockage lisible par ordinateur, comprenant un programme d'ordinateur qui, lorsqu'il est exécuté sur un ordinateur ou dans une station de base de femtocellule (20) ou encore dans une entité de réseau d'un réseau mobile terrestre public (30), fait mettre en oeuvre à l'ordinateur ou à la station de base de femtocellule (20) ou encore à l'entité de réseau du réseau mobile terrestre public (30) un procédé selon l'une des revendications 1 à 5.
